# EUROPEAN PATENT APPLICATION

(11) **EP 1 906 302 A1**
(43) Date of publication of application: **02.04.2008**
(21) Application number: 07018024.5
(22) Date of filing: 13.09.2007
(51) Int. Cl.: G06F 9/44

(54) **Usage of virtualization software for shipment of software products**

(30) Priority: 29.09.2006 US 540719
(71) Applicant: SAP AG, 69190 Walldorf (DE)
(72) Inventor: Steinwagner, Matthias, 69168 Wiesloch (DE); Trunz, Wolfgang, 76689 Karlsdorf-Neuthard (DE)
(74) Representative: Müller-Boré & Partner Patentanwälte

(57) **Abstract**

An operating environment (112) of a virtual machine (122) running on virtualization software (124) may be configured with a guest operating system (114) and a prerequisite application (116), as required by the product application (118) (e.g. the software product to be shipped). The product application (118) may then be installed onto the guest operating system (114), and an image (120) of the entire virtual machine (122), including the product application (118), may be captured. The product application (118) may then be deployed (e.g. shipped) by providing the image (120) to a plurality of end-user devices (136A), (136B), wherein the virtual machine (122), including the product application (118) in the operating environment (112) of the virtual machine (122), may be implemented thereon.

## Description

### TECHNICAL FIELD

This description relates to the usage of virtualization software for shipment of software products.

### BACKGROUND

As software applications become more complex, deployment of the complex software applications, including the installation thereof, also may become more complicated, problematic, and/or time consuming. As a result, application vendors may spend increasing amounts of time and money to help customers install the complex application(s). Further, relatively more intricate initialization sequences may be required for customers who want to operate the complex application(s), such as when a user of a mobile device with limited computing resources attempts to install/run the complex application, including running the application initialization sequences.

Further, there may exist heterogeneous landscapes onto which the software applications are to be deployed, such as when a customer is a business entity that may have a number of platforms, sites, and/or employees which require installation of the complex application. Such heterogeneous landscapes may have many different hardware and software environments, which may be difficult for the software provider to know about ahead of time. For example, a particular customer may or may not have the hardware/software pre-requisites required to install the complex application. Even if installation succeeds, the software provider may have difficulty in maintaining and/or upgrading the installed application.

### SUMMARY

Various embodiments of the usage of virtualization software for the shipment of software products are disclosed. In an example embodiment, an operating environment of a virtual machine running on virtualization software may be configured with a guest operating system and a prerequisite application, as required by the product application (e.g. the software product to be shipped). The product application may then be installed onto the guest operating system, and an image of the entire virtual machine, including the product application, may be captured. The product application may then be deployed (e.g. shipped) by providing the image to a plurality of end-user devices, wherein the virtual machine, including the product application in the operating environment of the virtual machine, may be implemented thereon.

In another example embodiment, an apparatus may include a processor. The processor may configure the operating environment of a virtual machine, running on virtualization software, with a guest operating system and a prerequisite application associated with the product application. The processor may then install the product application onto the guest operating system and capture an image of the virtual machine, including the product application. The product application may then be deployed by distributing the image to a plurality of end-user devices wherein the product application in the operating environment of the virtual machine may be implemented thereon.

In another example embodiment, the product application may be installed for a customer by first determining that an order from the customer specifies that the product application is to be installed on a local device of the customer. Second, the operating environment of the virtual machine running on a host device may be configured based on the order. Third, based on the product application, a guest operating system to be included in the operating environment may be determined. Fourth, the guest operating system may be configured with the prerequisite application. Fifth, the product application may be installed onto the guest operating system. Sixth, an image of the virtual machine of the host device may be captured. Finally, the customer may be provided with both instructions on how to access the virtualization software and the image for execution of the virtual machine.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram of an example system for using virtualization software for shipment of software products.

FIG. 2 is a flowchart illustrating example operations of the system of FIG. **1.**

FIG. 3 is a block diagram of an example system for using virtualization software for shipment of software products, using additional or alternative features than the system of FIG. 1.

FIG. 4 is a flowchart illustrating example operations of the system of FIG. 1 and/or FIG. 3.

### DETAILED DESCRIPTION

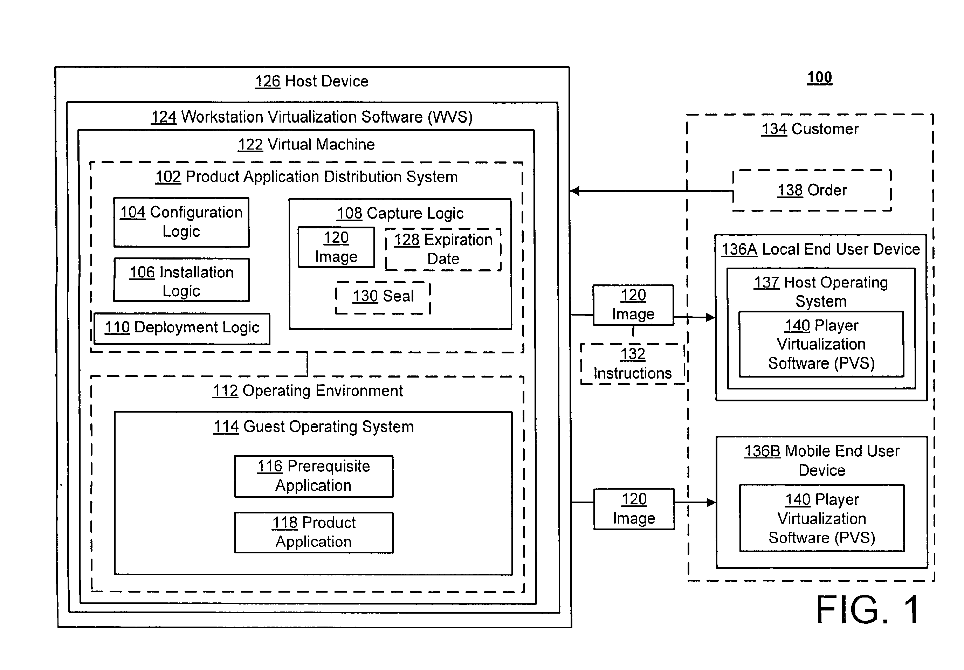

FIG. 1 is a block diagram of an example system 100 for using virtualization software for shipment of software products. In the example of FIG. 1, the system 100 allows a software provider to install, deploy, distribute, or otherwise ship software to customers or other users in a manner that is efficient for the software provider and that is easy, intuitive, and reliable for the customers or other recipients. For example, by requiring usage of the same (or compatible) virtualization software by both the software provider and the recipients, software installation may occur with minimal effort on both sides of the transaction, and across a wide variety of platforms. Further, after the initial installation, software operation, repair, and upgrades also may be performed in an efficient, reliable manner.

The system 100 includes a product application distribution system 102. The product application distribution system 102 may be used to provide some or all of the functionality just described, as well as additional or alternative functionality. For example, the product application distribution system 102 may operate in the context of virtualization software 124 being run by the software provider, with the anticipation that customers or other recipients will be running the same or similar virtualization software.

Thus, the product application distribution system 102 may be used to install software on the software provider side, which may then be provided on the recipient side, all within the context of the same or similar virtualization software. As referenced above, many types of such virtualization software exist that may be compatible with the system 100 and used to implement the product application distribution system 102. Further, for example, the product application distribution system 102 may represent software that is installed and executed locally, or may represent software that is accessed (in whole or in part) remotely, e.g., over the Internet or other network.

For example, such virtualization software on the software provider side may include workstation virtualization software 124, which may represent an application or a suite of products that is configured to provide emulation of foreign/guest software and/or hardware, in the context of native software/hardware. In FIG. 1, for example, the workstation virtualization software 124 represents an emulation of software and/or hardware in the context of a host device 126. The host device 126 may include any device operable to support the workstation virtualization software 124, such as, for example, a desktop computer, a laptop computer, or a server, and may implement virtually any industry standard hardware platform.

The workstation virtualization software 124 may be used to design and implement a virtual machine 122. The virtual machine 122 may represent and emulate virtually any desired aspect of a separate, physical computer, and operates as if using its own processor, memory, inputs/outputs, and peripherals, so that the experience of a user is the same as if using such a separate computer. For example, the host device 126 may have a certain amount of processing power and memory, and a certain number/type of inputs/outputs and peripherals (e.g., a video adaptor, network adaptor, hard disk adaptor, and/or drivers for USB, serial, or parallel devices). Some subsets of these features may be allocated by the workstation virtualization software 124 to the virtual machine 122, so that the virtual machine 122 may operate as a different computer, having the allocated subset of features. Accordingly, the product application distribution system 102 may run on the virtual machine 122, independently (for purposes of this description) of the host device 126.

The workstation virtualization software 124 may allow for the creation and operation of multiple virtual machines 122 simultaneously. An example workstation virtualization software 124 may be VMware Workstation™, or any other virtualization software operable to perform at least some of the aforementioned functionality. As referenced above, the host device 126 may include virtually any device operable to support the workstation virtualization software 124, including the virtual machine 122 and all of its installed components.

Thus, the product application distribution system 102, running on the virtual machine 122 of the workstation virtualization software 124, may be used to install a product application 118 on the virtual machine 122. As referenced above, the product application 118 may represent or include software provided by a software provider that is ready for deployment to a customer or other recipient. The software developer, for example, may have already coded, debugged, and tested the product application 118 and may be ready to deploy the product application 118 (or an updated version of the product application 118) to one or more of its customers, represented in FIG. 1 by customer 134.

By anticipating, for example, that the customer 134 will be running virtualization software that is the same or similar to the workstation virtualization software 124, the software provider may simply install the product application 118 directly onto the virtual machine 122, e.g., in whatever manner is considered to be the most efficient and effective. Then, as described in more detail below, the product application distribution system 102 may be used to capture an image 120 of the virtual machine 122, for shipment to the customer 134 and subsequent execution thereof on the virtualization software anticipated to be installed on the customer side. In this way, the customer 134 may simply run the virtual machine 122, including the product application 118, without performing any installation or configuration thereof. Accordingly, an experience of the customer 134 may be improved, and the opportunity for error in installing the product application 118 on the customer side may be reduced or eliminated.

In the example of FIG. 1, the product application distribution system 102 may include configuration logic 104, installation logic 106, capture logic 108, and deployment logic 110. The product application distribution system 102 and the logic components 104-110 represent example components that may be constructed and used in the manner(s) described below. However, such examples are not limiting, and it should be understood that features and functionalities of the product application distribution system 102 and the logic components 104-110, and other components (not shown) may overlap and/or be shared there-between, and/or may be located elsewhere than is illustrated in FIG. 1. For example, the product application distribution system 102, or components 104-110 thereof, may be run in an operating environment 112 and/or a guest operating system 114. Further, various aspects of the product application distribution system 102 and/or the logic components 104-110 may be performed or directed by human users, as well.

In the example of FIG. 1, the configuration logic 104 may represent one or more components of the product application distribution system 102 that may be used, for example, to configure the operating environment 112 associated with the virtual machine 122. The operating environment 112 refers generally to the environment in which programs are run on the virtual machine 122. As should be understood from the above explanation of the virtual machine 122, this environment may include both software and hardware settings/allocations, e.g., whether a USB port or other input/output port should be included with the operating environment 112.

As a further example, the operating environment 112 may provide an environment where the guest operating system 114 may be configured or installed. For example, the configuration logic 104 may install the guest operating system 114 onto the operating environment 112, perhaps in preparation for later installation of the product application 118. It should be understood that the guest operating system 114 may be different from an operating system running on the host device 126. For example, the guest operating system 114 may be Linux™ while the host device 126 may operate Microsoft Windows™.

The guest operating system 114 may perform normal duties of an operating system, including, for example, managing the hardware and software resources of the virtual machine 122. More specifically, for example, the guest operating system 114 may control and allocate memory, prioritize the processing of instructions, control input and output devices, facilitate networking, and manage files. For example, the guest operating system may be Windows™, Linux™, MAC OSX™ or any other guest operating system that may be configured on the virtual machine 122 to operate the product application 118.

The configuration logic 104 may also determine whether the product application 118 requires any prerequisite applications 116 to be installed on the guest operating system 114, and may then be used to install the required prerequisite application(s) 116. For example, the configuration logic 104 may determine that the guest operating system 114 should be Windows XP™, and that the product application 118 requires concurrent installation or availability of the Java™ Development Kit 2.0 within the Windows XP™ environment. Consequently, the configuration logic 104 may then be used to install those components onto the guest operating system 114.

The prerequisite application 116 may include any software program, application, plug-in, or code that may be required or recommended in order for the product application 118 to be installed and/or operated on the guest operating system 114. The prerequisite application 116 may provide a utility, library, database, and/or function used by the guest operating system 114 and/or the product application. For example, the prerequisite application 116 may be a database or database product application that may be accessed by the product application 118, so that the prerequisite application 116 must be installed or the product application 118 to function properly. In another example, the prerequisite application 116 may include a suite of tools, such as in the Java™ Development Kit example just mentioned, which may include, for example, a compiler, software libraries, a document generator and a debugger.

By allowing the software provider to install/configure the operating environment 112 and associated components directly, many common installation problems may be avoided. For example, when customers are responsible for installing the product application 118, some of the customers may not install the associated prerequisite application 116. Consequently, the product application 118 may not function, leading to frustration or other difficulties for the customers in question. Moreover, it may be difficult for the software provider to identify that the lack of the pre-requisite application 116 on the customer side as the source of the installation difficulty, so that the software provider finds it difficult to correct the problem.

In the system 100, however, the customer 134 merely needs to have a local version of the virtualization software 124 available, and then may access and operate the virtual machine 122 (and hence, the product application 118) directly, using the received image 120. Accordingly, the customer 134 is relieved of the responsibility and of the need to install the product application 118 onto a local environment, and may more quickly, easily, and directly access and use the product application 118.

After the configuration logic 104 has been used to configure the operating environment 112, including installing the guest operating system 114 and any necessary prerequisite application(s) 116, the installation logic 106 of the product application distribution system 102 may be used to install the product application 118 onto the guest operating system 114. The installation logic 106 may be a component of the product application distribution system 102 that may be used to install, configure, and instantiate the product application 118 on the guest operating system 114.

For example, in addition to the difficulties described above with respect to identifying, obtaining, and installing the guest operating system 114 and pre-requisite application 116, it also may occur that the product application 118 itself is associated with a complex installation procedure involving a series of steps that may require network configuration or other technical knowledge that may be beyond the abilities or desires of at least some customers or other recipients. Thus, the software provider may use the installation logic 106 to install the product application 118 onto the guest operating system 114, including performing whatever configuration is needed (e.g., network configuration). In this way, again, a need for the customer 134 to perform these steps may be reduced or eliminated.

The installation logic 106 may also, for example, instantiate the product application 118 after the product application 118 has been installed. Instantiation of the product application 118 may include, for example, starting the product application 118 and allowing the product application 118 to boot-up, load drivers, associate with libraries, populate databases, and perform other start-up procedures. The installation logic 106 may, for example, instantiate the product application 118 in advance of delivering the image 120 to the customer 134, so that the customer 134 does not have boot-up the product application 118 again after receiving the image 120 and accessing the virtual machine 122 therefrom.

After the installation logic 106 installs the product application 118 on the guest operating system 114 of the operating environment 112, the capture logic 108 may then capture the image 120 of the virtual machine 122. The capture logic 108 may be a component of the product application distribution system 102 that may be used to capture the image 120 of the virtual machine 122 for deployment to the customer 134. The capture logic 108 may, for example, store the entire virtual machine 122 into the image 120. That is, along with storing the virtual machine 122, the capture logic also may store the operating environment 112, the guest operating system 114, the prerequisite application(s) 116, and the product application 118 as installed, configured and instantiated on the image 120.

The image 120 may include a file, a plurality of files, a folder, code, or any other storage method that may be used to save the virtual machine 122, including all its components, in its current state. The image 120 may then be used to resume operation of the virtual machine 122 from its previously saved state.

Thus, the image 120 may also include, for example, the product application 118 in a partially-executed or instantiated state. For example, the configuration logic 104 may instantiate the product application 118, and the capture logic 108 may capture the image 120 as including the instantiated product application 118. Then, the customer may use the image 120 to operate the product application 118 in the operating environment 112 from its instantiated state.

In another example embodiment, the customer 134 may begin operation of the product application 118, and may then capture a snapshot of the virtual machine 122 in the image 120, including the partially-executed product application 118 in its current state. The customer may then use the image 120 to resume operation of the product application 118 on the virtual machine 122 from this previously-executed state.

After the capture logic 108 captures the image 120 of the virtual machine 122 including the product application 118 as installed and instantiated in the operating environment 112, the capture logic 108 may then apply an expiration date 128 and/or a seal 130 to at least part of the image 120. The expiration date 128 may be a date that on which the image 120 expires. Upon reaching the expiration date 128, the operation of the product application 118 may be altered. For example, the expiration date 128 may be May 5, 2007. If the expiration date 128 of May 5, 2007 is applied to the image 120, then on or after May 5, 2007 the product application 118 (or the entire virtual machine 122) may no longer be operable. In another example embodiment, the expiration date 128 may be configured to be 30 days from the first execution of the product application 118. Then, for example, after the passing of 30 days, certain specified features the product application 118 may no longer work, while the product application 118 (with the exception of the specified features) may still be operable.

The capture logic 108 may then determine whether to apply the seal 130 to at least part of the image 120. The seal 130 may be a security device operable to prevent a customer or user from accessing and/or modifying one or more features of the image 120. For example, the seal 130, if applied to the image 120, may be configured to prevent a user (e.g., the customer 134) from manually modifying any part of the virtual machine 122 contained within the image 120, e.g., may prevent the customer 134 from installing new applications on the guest operating system 114 or from removing the product application 118. In another example embodiment, the seal 130, if applied to the image 120, may only prevent the customer from removing the prerequisite application 116 and the product application 118, but may allow the user to install other programs on the guest operating system 114.

After the capture logic 108 has captured the image 120, the deployment logic 110 may then be used to deploy the product application 118, e.g., by distributing the image 120 and instructions to the customer 134. The deployment logic 110 may be a component of the product application distribution system 102 that may provide the image 120 and instructions 132 to a plurality of end user devices 136 of the customer 134.

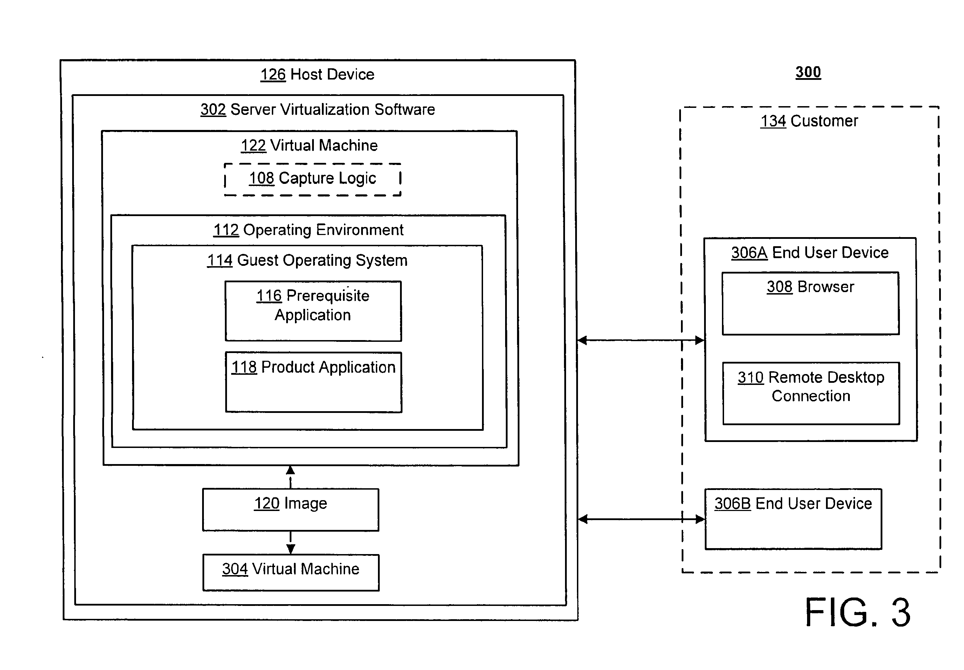

For example, the distribution logic 110 may provide the image 120 on the host device 126, such that an end user device 136A or 136B may retrieve and download the image 120 to the device. In another example embodiment, the distribution logic 110 may transmit the image 120 directly to the end user device(s) 136A, 136B of the customer 134. In an alternative embodiment (as discussed below in more detail with respect to FIG 3) the deployment logic 110 may provide a service wherein an end user device of the customer 134 may operate the application 118 (e.g., from the image 120) on a hosted server.

The customer 134 may include any party that intends to operate the product application 118. For example, the customer 134 may include a consumer who pays for the product application 118. However, the customer 134 should not be construed to be limited to one who provides monetary compensation for the product application 118. For example, the product application 118 may be deployed as part of a free promotional campaign, or may be deployed in a university or other academic setting. The customer 134 also may represent a large entity such as an enterprise or, as just mentioned, a university, so that the product application 118 may need to be supplied to tens or hundreds or more of individual users (e.g., individual employees of an enterprise).

In example implementations, the customer 134 may submit an order 138 or otherwise request the product application 118. For example, the software provider may develop the product application 118 as a new application. Then, for example, the customer 134 may place the order 138 for the product application 118. The software provider may then obtain and provide the image 120 to the customer 134.

Additionally, or alternatively, the customer 134 also may be provided the image 120 unilaterally, without submitting any sort of explicit request for the product application 118. For example, the customer may already be operating a first version of the product application 118. Then, for example, the software provider may develop a second version of the product application 118 (e.g., an upgrade) to replace the first version. The software provider may then provide the image 120, including the second version of the product application 118, to the customer 134.

The order 138 may include a request from the customer 134 to receive or operate the product application 118. The order 138 may include a contract, a license, a sale, a purchase or any other agreement wherein the product application 118 may be provided to the customer 134. For example, the customer 134 may place an order 138 with a product vendor to receive the product application 118 on a plurality of the customer's 134 end user devices 136A, 136B. The image 120 may then be provided to the customer 134 based on the order 138. In another example embodiment, the customer 134 may already be operating a version of the product application 118 on its end user devices, however, the order 138 may include a provision wherein the customer 134 may be provided any updates and/or patches to the product application 118 as they become available. The image 120 may then be provided to the customer 134 based on the order 138.

In another example embodiment, the order 138 may provide the application distribution system 102 with information about what the customer 134 requires or prefers. For example, the order 138 may specify which guest operating system 114 and prerequisite application(s) 116 the customer 134 requires. The order 138 may also, for example, specify a plurality of end user devices 136A,B to which the image 120 including the product application 118 are to be provided.

The end user devices 136A,B may include or represent virtually any devices configured to operate virtualization software that is the same as, similar to, or compatible with, the workstation virtualization software 124. For example, the end user devices 136A, B may implement virtualization software as including player virtualization software (PVS) 140. Such PVS 140 may represent, for example, virtualization software that allows the customer to play/operate the virtual machine 122, without allowing the customer to perform certain other functions (e.g., installing other software).

For example, the mobile end user device 136B may be any device configured to operate both the PVS 140 and also be mobile, such as a personal digital assistant (PDA) or cellular telephone. Then, for example, the local end user device 136A may be any device (including any mobile end user device 136B) configured to operate the PVS 140 such as a personal computer, laptop, personal digital assistant (PDA), image player, audio/video player, or network device. The end user devices 136A,B may include an industry standard hardware platform, such as x86, that may support the PVS 140 and the virtual machine 122. In this sense, it should be understood from the above description that the only required platform for the product application 118 for the customer 134 is one or more such standard platforms; that is, as long as the various end user devices each support at least ones of these industry standards (and can install virtualization software), then the product application 118 may be installed and executed.

Local end user device 136A may itself include a host operating system 137. The host operating system 137 may perform normal duties of an operating system, including, for example, managing the hardware and software resources of the local end user device 136A and running the player virtualization software (PVS) 140. More specifically, for example, the host operating system 137 may control and allocate memory, prioritize the processing of instructions, control input and output devices, facilitate networking, and manage files.

The host operating system 137 may be the same, a similar or a different operating system than the guest operating system 114 configured on the virtual machine 122. For example, the local end user device 136A may be running Windows™ as the host operating system 137, while the virtual machine 122 may be configured with Linux™, or vice-versa. In additional embodiments, the mobile end user device 136B may also have its own host operating system (not shown) which may be different from both the host operating system 137 and the guest operating system 114.

The player virtualization software (PVS) 140 may be an application operable to run, share, and evaluate the virtual machine 122, including the product application 118, from the image 120. The PVS 140 may also be configured to receive and/or retrieve and implement the image 120 and run the virtual machine 122. For example, the virtualization software 140 on the mobile end user device 136B may receive the image 120, process the image 120 and run the virtual machine 122 as provided by the image 120. In an example embodiment, the PVS 140 may be VMware Player™, or any other virtualization software operable to perform at least some of the aforementioned functionality.

In another example embodiment, the local end user device 136A may not have the PVS 140 already installed. In such a case, the deployment logic 116 may provide the customer 134 and/or the local end user device 136A with instructions 132 on how to install the PVS 140 and/or implement the image 120. For example, the instructions 132 may instruct the customer 134 to download the PVS 140 from a specific internet site and provide directions on installing the PVS 140 onto the local end user device 136A. In another example embodiment, the local end user device 136A may already have the PVS 140 installed, and thus the deployment logic 116 may provide instructions 132 on how to implement the image 120 with the PVS 140 and thereby operate the product application 118.

Many other implementations exist, some of which are described in more detail herein. For example, rather than the host device 126 providing the image 120 to the end user devices 136A,B, the product application distribution system 102 may operate as a service, wherein the end user devices 136A,B may operate the product application 118 locally on the host device 126 (as described below in the example of FIG. 3). Also, system 100 depicts components of the product application distribution system 102 as residing together on the virtual machine 122; however, in alternative embodiments components or features of the product application distribution system 102 may be distributed across several devices and/or exist on various layers (i.e. on the host device 126, on the virtual software 124, and/or on the virtual machine 122).

In some of the example embodiments described above, it is assumed that the software provider may release a new product application 118 to the market, and may need to provide the product application 118 to customers for the first time. In other examples, however, the software provider may have released a previous version of the product application 118, and may have a number of customers using the previous version of the product application 118. In this case, the software provider may use the system 100 to install an upgrade to the product application 118 from the previous version.

Thus, the system 100 may be used, for example, to allow a software provider to deploy a pre-installed and instantiated product application 118 (or updates thereto) in the operating environment 112 of the virtual machine 122, save the image 120 of the virtual machine 122, and distribute the image 120 to its customers to implement on their respective local machines. Additionally, the system 100 may be used, for example, to allow the software providers to provide a service to deploy the product application 118 (or updates thereto) by providing its customers access to a server containing the image 120 of its pre-installed and instantiated product application 118 in the operating environment 112 of the virtual machine 122 (as described in more detail in the example of FIG. 3).

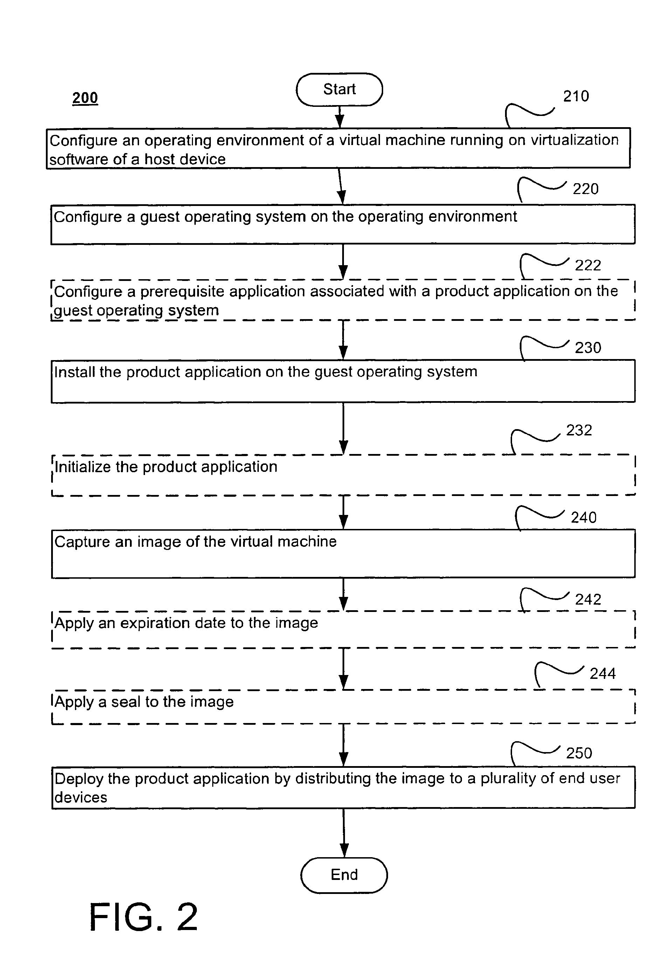

FIG. 2 is a flowchart 200 illustrating example operations of the system of FIG. 1. More specifically, FIG 2 illustrates an operational flow 200 representing example operations related to usage of virtualization software for shipment of software products.

After a start operation, an operating environment of a virtual machine running on virtualization software of a host device may be configured (210). For example, as shown in FIG 1, the configuration logic 104 of the product application distribution system 102 may be operable to configure the operating environment 112 of the virtual machine 122 running on the workstation virtualization software (workstation virtualization software) 124 of the host device 126. As discussed above, the host device 126 may be any device that conforms to an industry standard that supports the operation of the workstation virtualization software 124 (and thus the virtual machine 122).

Then, a guest operating system may be configured on the operating environment (220). For example, the configuration logic 104 may determine which guest operating system 114 to install on the operating environment 112, and may then install the guest operating system 114 onto the operating environment 112. The guest operating system 114 may be a software system that manages the hardware and software resources of a computer, including a virtual machine, while the operating environment 112 may be the environment in which programs are run on a virtual machine, including the guest operating system 114. In a more specific example, configuration logic may install the Linux operating system onto the operating environment 112.

A prerequisite application associated with a product application on the guest operating system may then be configured (222). For example, the configuration logic 104 may determine that the product application 118 requires that a prerequisite application 116 be installed on the guest operating system 114 in order for the product application 118 to function as intended, or to function optimally. Then, for example, the configuration logic 104 may be used to install the prerequisite application 116 on the guest operating system 114. This may allow different co-existing versions of the prerequisite application 116 to operate on the local end user device 136A and the image 120. In a more specific example, the configuration logic 104 may determine that the product application 118 requires the installation of the Java™ Development Kit (JDK) 1.5, while the host operating system only runs JDK 1.3. Then for example, the configuration logic 104 may be used to install JDK 1.5 onto the guest operating system 114 to support the product application 118, while the host operating system may continue to operate JDK 1.3.

Then the product application may be installed on the guest operating system (230). For example, as shown in FIG. 1, the installation logic 106 of the product application distribution system 102 may be used to install the product application 118 on the guest operating system 114. The product application 118 may be any application, software, or code configured to operate on the virtual machine 122, within the operating environment 112. The product application 118 may also be an update to a previous product application 118.

After being installed, the product application may be initialized (232). For example, the installation logic 106, after installing the product application 118, may then initialize the product application 118. In initializing the product application 118, the installation logic 106 may run through all the boot-up and set-up procedures required when an instance of the product application 118 is executed.

An image of the virtual machine may then be captured (240). For example, as shown in FIG 1, the capture logic 108 of the product application distribution system 102 may be operable to capture an image 120 of the virtual machine 122. The image 120 may include the product application 118 as installed (and perhaps as instantiated) on the guest operating system 112 (including the prerequisite application(s) 116) of the operating environment 112 of the virtual machine 122. The image 120 may later be used, for example, to operate the produce application 118 from its instantiated state.

Then an expiration date may be applied to the image (242). For example, the capture logic 108, after capturing the image 120 of the virtual machine 122, may apply an expiration date 128 to the image 120. The expiration date 128 may alter the functionality of at least part of the image 120 when reached. For example, when an expiration date 128 of April 1, 2008 is applied to the image 120 and is reached, this may cause the product application 118 to stop operating, or, alternatively, may cause certain features of the product application 118 to stop operating.

A seal may be applied to the image (244). For example, the capture logic 108, after capturing the image 120 of the virtual machine 122, may apply a seal 130 to the image 120. The seal 130 may prevent an end user device 136A,B and/or a customer 134, or other user from accessing and/or modifying at least part of the image 120. For example, if a seal 130 is applied to the image 120, the seal 130 may prevent a user from removing and/or modifying any files associated with the product application 118.

The product application may then be deployed by distributing the image to a plurality of end user devices (250). For example, as shown in FIG 1, the deployment logic 110 of the product application distribution system 102 may be operable to deploy the product application 118 by distributing the image 120 to a plurality of end user devices 136A,B. In a more specific example, the deployment logic 110 may transmit the image 120 over a communications medium to the end user devices 136A,B. In an alternative embodiment, the deployment logic 110 may provide the image 120 to a certain location wherein the end user devices 136A,B may go and retrieve the image 120.

FIG. 3 is a block diagram of an example system 300 for using virtualization software for shipment of software products, using additional or alternative features than the system of FIG. 1. More specifically, in the example of FIG. 3, the deployment logic 110 is configured to distribute the image 120 as a service. In the example of FIG 3, and analogous to various of the examples discussed above, the product application 118 may be deployed by providing (access to) the image 120 including the virtual machine 122 and all its components on a host device 126.

The host device 126 in FIG 3 may be substantially similar to the host device 126 from FIG. 1 (as described above). The host device as shown in FIG. 3 may be configured and able to operate server virtualization software 302, rather than the workstation virtualization software (workstation virtualization software) 124.

The server virtualization software 302 may include a software package or application operable to create, edit, and play virtual machines. The server virtualization software 302 may be operable to host a plurality of virtual machine instances 122, 304 based on one or more images 120. Furthermore, the server virtualization software 302 may provide connections that allow a plurality of devices to connect to the server virtualization software 302 and operate the product application 118 on the virtual machine(s) 122, 304. For example, a first device may connect to the server virtualization software 302 over a network, and may operate the product application 118 on the virtual machine 122. Then a second device may connect to the server virtualization software 302 over a network and operate the product application 118 on the virtual machine 304. An example server virtualization software 302 may be VMware Server™, or any other virtualization software operable to perform at least some of the aforementioned functionality.

As discussed above, the server virtualization software 302 may be configured to operate a plurality of virtual machines 122, 304 simultaneously, based on the image 120. The virtual machine 122 may be similar or identical to virtual machine 304. For simplicity purposes the components of virtual machine 304, including the operating environment 112, guest operating system 114, prerequisite application 116, product application 118, and capture logic 108) are not illustrated in FIG. 3, but may be included, as needed.

Also, FIG. 3 depicts only a single image 120 used as a basis for both virtual machines 122, 304. However, in alternative embodiments there may exist a separate image 120 for each virtual machine 122, 304. In other embodiments, several images 120 may be associated with one or several virtual machines 122, 304 as well.

As discussed above, the virtual machines 122, 304 may be representations of actual, physical machine(s), using software that provides an operating environment 112 and that run or host a guest operating system 114, which itself may include the product application 118. Thus, analogously to the system 100 of FIG 1, the virtual machine(s) 122, 304 also may include capture logic 108. The capture logic 108 may be operable to capture an image of the virtual machine 122, 304 for later use. For example, the product application 118 may be instantiated on virtual machine 122 and stored in the image 120. Then, for example, virtual machine 304 may operate the product application 118 from its instantiated state, based on the image 120. Each virtual machine 122, 304 may be allocated to, and accessed/used by, a separate end user device 306A, B.

The end user device 306A,B may include an industry standard hardware platform operable to support a browser and/or a remote desktop connection. For example, the end user device 306A,B may be an x86 compatible device. The end user device 306A,B may include a personal computer, laptop, personal digital assistant (PDA), image player, audio/video player, or network device. The end user device 306A may also include a browser 308 and/or a remote desktop connection 310. For purposes of simplicity and clarity, the components of end user device 306B, including the browser 308 and remote desktop connection 310, are not illustrated in FIG. 3, but these or additiona/alternative components may exist.

The browser 308 may be a conventional software application that allows a user to interact with text, images and other information, e.g., on a webpage from a server. The browser 308 may also be operable to connect directly to another server or other computer. For example, a user may enter an internet protocol (IP) address into the browser 308, and the browser 308 may then connect to the host device 126 associated with the IP address. The browser 308 may then, for example, allow the end user device 306A to interact with the server virtualization software 302 and operate the product application 118 from the virtual machine 122, based on the image 120. In example embodiments, the browser 308 may be, for example, Internet Explorer™, Mozilla™, Opera™, Apple Safari™ or any other browser configured to interact with information located on the host device 126.

The remote desktop connection 310 may be a software component configured to allow the end user device 306A to access product applications and/or data stored on a remote computer over a network connection. For example, the remote desktop connection 310 may enable the end user device 306A to operate the product application 118 running on the guest operating system 114 of the operating environment 112 of the virtual machine 122 of the host device 126.

By providing the product application 118 in the context of the system 300 of FIG. 3, the customer 134 need not install virtualization software on the end user devices 306A, B, but may nonetheless gain the benefit of accessing and using the product application 118. For example, the customer 134 need not undergo, understand, or be concerned with the complexities and difficulties of installing the product application 118. Further, it may be straightforward for the software provider to install, upgrade, repair, or modify the product application, without inconvenience to the customer 134.

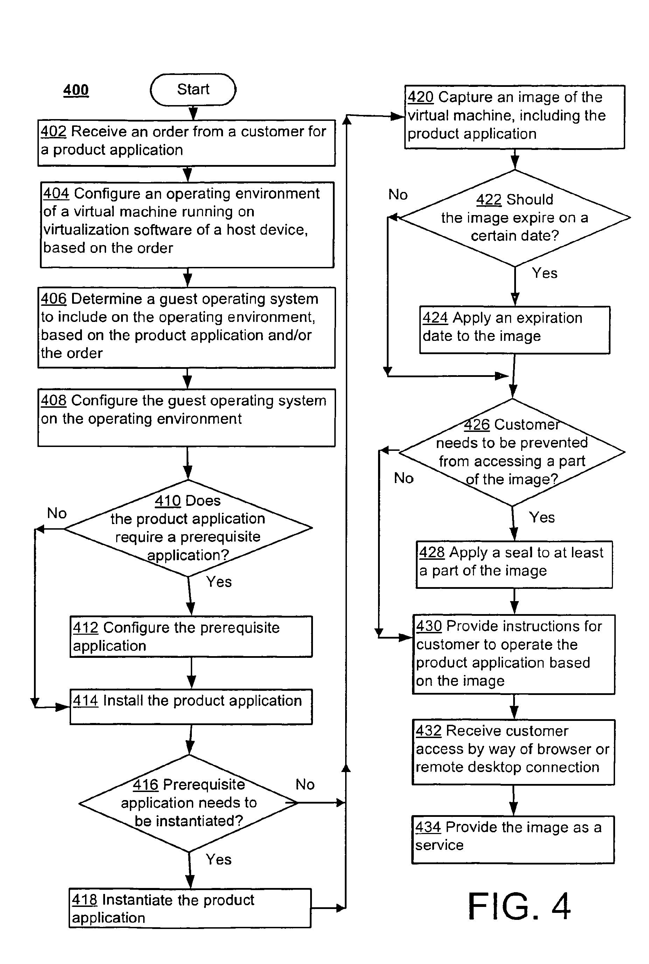

FIG. 4 is a flowchart 400 illustrating example operations of the systems of FIG. 1 and/or FIG. 3. More specifically, FIG. 4 illustrates an operational flow 400 representing example operations related to usage of virtualization software for shipment of software products illustrating example operations of the systems FIG. 1 and/or FIG. 3.

In the example of FIG. 4, an order from a customer for a product application may be received (402). For example, as shown in FIG 1, the customer 134 may submit an order 138 that may be received at the host device 126. The order 138, for example, may contain information specifying one or more of a guest operating system 114, prerequisite applications and/or which end user devices 136A,B may need to be provided the product application 118. Or, the order 138 may simply contain a request for the product application 118, and the software provider may determine these and other parameters.

The operating environment of a virtual machine running on virtualization software of a host device may be configured, based on the order (404). For example, the configuration logic 104 may configure the operating environment 112 of the virtual machine 122 running on the workstation virtualization software (workstation virtualization software) 124 or the server virtualization software of the host device 126, based on the order 138.

A guest operating system to include on the operating environment may be determined, based on the product application and/or the order (406). For example, the configuration logic 104 may determine which operating system to install on the operating environment 112 as the guest operating system 114. In an example embodiment, the order 138 may include an operating system required by the customer 134, such as Microsoft Windows™. In another embodiment the guest operating system 114 may be determined based on compatibility with the product application 118.

The guest operating system may then be configured on the operating environment (408). For example, after the configuration logic 104 determines which operating system to use as the guest operating system 114, the configuration logic 104 may then be used to install the guest operating system 114 onto the operating environment 112 of the virtual machine 122.

After the guest operating system is configured on the operating environment, it may be determined whether the product application requires a prerequisite application (410). If a prerequisite application is required, then the prerequisite application may be configured (412). For example, the configuration logic 104 may determine that the product application 118 requires a prerequisite application 116 (such as a database) in order to function properly. Then for example, the configuration logic 104 may install the prerequisite application 116 on the guest operating system 114. In another example, the customer 134 may specify a prerequisite application 116 to be configured on the guest operating system 114.

If no prerequisite application is required, or else after any required prerequisite application(s) are configured, the product application may be installed (414). For example, the installation logic 106 may install the product application 118 onto the guest operating system 114.

After the product application has been installed, it may be determined whether the product application needs to be instantiated (416). If so, then product application may be instantiated. For example, product application 118 may require a long boot-up and set-up time upon execution. In such a case, the installation logic 106 may instantiate the product application 118 to avoid the customer 134 from having to re-instantiate the product application 118 on each execution.

After the product application is instantiated, or else after it is determined that no instantiation is required, an image of the virtual machine, including the product application, may be captured (420). For example, the capture logic 108 of the application distribution system 102 may capture an image 120 of the virtual machine 122, including the product application 118. The image 120 may include a snapshot of each virtual machine 122 component, including the operating environment 112, guest operating system 114, prerequisite application 116, and product application 118. As shown in FIG. 3, the image 120 may also include some capture logic 108 functionality, wherein additional images 120 may be captured. The captured image 120 may allow the virtual machine 122 to be restored back to the state it was in when the image 120 was captured.

After the image is captured, an expiration date may be applied to the image (422, 424). For example, the capture logic 108 may determine that an expiration date 128 should be applied to the image 120, and then the capture logic 108 may apply the expiration date 128. The expiration date 128 may be a date or time period that when reached, may alter the operation of at least part of the image 120.

After the image is captured, a seal may be applied to the image if is determined that the customer needs to be prevented from accessing a part of the image (426, 428). For example, the capture logic 108 may determine that the customer 134 (or any other user) may not remove the product application 118 from the guest operating system 114 and thus may apply a seal 130 preventing removal of the product application 118 to the image 122.

Instructions for the customer to operate the product application based on the image may be provided (430). For example, the deployment logic 110 may provide instructions 132 to the local end user device 136A that detail how to install the player virtualization software (PVS) 124B, implement the image 120 with the PVS 124B and/or operate the product application 118.

Finally, the image may be provided wherein the customer may access the host device through a browser or remote desktop connection and operate the application (432, 434). For example, in FIG 3, the image 120 has already been captured. Then for example, the end user device 306A may use either a browser 308 or remote desktop connection 310 to communicate with the host device 126 running the server virtualization software (server virtualization software) 302 over a network. Upon receiving the connection from the end user device 306A, the server virtualization software 302 may instantiate a virtual machine instance 122 based on the image 120. Then for example, the end user device 306A may operate the product application 118 in the guest operating system 114 of the operating environment 112 of the virtual machine 122 running on the server virtualization software 302 of the host device 126. Then for example, the end user device 306B may also connect to the host device 126 and may operate the product application 118 based on the image 120 (or another image, not shown) in a second virtual machine instance 304.

Although the above examples have been provided for the sake of explanation, it should be understood that many other embodiments may be implemented. For example, the image 120 may be provided in numerous other ways, other than those presented above.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments.

## Claims

1. A method comprising
configuring an operating environment (112) of a virtual machine (122) running on virtualization software (124), the virtual machine (122) including a guest operating system (114) and a prerequisite application (116) associated with a product application (118);
installing the product application (118) onto the guest operating system (114);
capturing an image (120) of the virtual machine (122), including the product application (118); and
deploying the product application (118) by providing the image (120) to a plurality of end-user devices (136A, 136B), for implementation thereon of the virtual machine (122), including the product application (118) in the operating environment (112) of the virtual machine (122).

2. The method of claim 1 wherein the configuring comprises:
installing the guest operating system (114) onto the operating environment (112).

3. The method of claim 1 or 2 wherein the configuring comprises:
determining that the prerequisite application (116) is required to install and/or operate the product application (118) on the virtual machine (122); and
installing the prerequisite application (116) on the guest operating system (114).

4. The method of any one of the preceding claims wherein the configuring comprises:
configuring the operating environment (112) to allow the product application (118) to interact with a hardware component of each of the end-user devices (136A, 136B).

5. The method of any one of the preceding claims wherein the installing comprises:
configuring the product application (118) on the guest operating system (114) of the virtual machine (122) running on a host device (126).

6. The method of any one of the preceding claims wherein the installing comprises:
installing the product application (118) on the guest operating system (114) of the virtual machine (122) running on a host device (126); and
initializing the product application (118).

7. The method of any one of the preceding claims wherein the capturing comprises:
initializing the product application (118) on the guest operating system (114) of the virtual machine (122); and
capturing the image (120) of the virtual machine (122), including the product application (118) as initialized.

8. The method of any one of the preceding claims wherein the capturing comprises:
determining an execution point for the product application (118);
executing the product application (118) until the execution point is reached; and
capturing the image (120) of the virtual machine (122) including the product application (118) as executed until the execution point, for execution therefrom at an end-user device (136A, 136B).

9. The method of any one of the preceding claims wherein the capturing comprises:
applying a seal (130) to the image (120), wherein the seal (130) is configured to prevent an end-user device (136A, 136B) from modifying at least a portion of the image (120).

10. The method of any one of the preceding claims wherein the capturing comprises:
determining an expiration date (128) for the image (120), wherein the expiration date (128) is configured to prevent, at least partially, an operation of the product application (118) on the operating environment (112) of the virtual machine (122) when the expiration date (128) is reached; and
applying the expiration date (128) to the image (120).

11. The method of any one of the preceding claims wherein the deploying comprises:
providing the image (120) to the plurality of end-user devices (136A, 136B) on which a local version of the virtualization software (124) is installed, wherein the plurality of end-user devices (136A, 136B) are configured to receive and/or retrieve the image (120).

12. The method of any one of the preceding claims wherein the deploying comprises:
providing the image (120) on a host device (126) as a service accessible by the end-user devices (136A, 136B).

13. The method of any one of the preceding claims wherein the deploying comprises:
providing the image (120) to an end-user device (136A, 136B), wherein virtualization software (124) on the end-user device (136A, 136B) is configured to implement the virtual machine (122) including operating the product application (118) in the operating environment (112).

14. The method of any one of the preceding claims wherein the deploying comprises:
providing the image (120) to the end-user devices (136A, 136B), wherein each end-user device (136A, 136B) comprises resources allocated to run a local version of the virtualization software (124).

15. A computer program product comprising computer readable instructions, which when loaded and run in a computer and/or computer network system, causes the computer system and/or the computer network system to perform operations according to a method of anyone of the preceding claims.

16. An apparatus comprising:
a processor, the processor configured to:
configure an operating environment (112) of a virtual machine (122) running on virtualization software (124), the virtual machine (122) including a guest operating system (114) and prerequisite application (116) associated with a product application (118);
install the product application (118) onto the guest operating system (114);
capture an image (120) of the virtual machine (122), including the product application (118); and
deploy the product application (118) by distributing the image (120) to a plurality of end-user devices (136A, 136B), for implementation thereon of the virtual machine (122), including the product application (118) in the operating environment (112) of the virtual machine (122).

17. A method of installing a product application (118) for a customer, comprising:
determining an order 138 from a customer (134) for installation of the product application (118) for a local device (136A), (136B) of the customer (134);
configuring an operating environment (112) of a virtual machine (122) running on virtualization software (124) of a host device (126), based on the order 138;
determining a guest operating system (114) for inclusion in the operating environment (112), based on the product application (118);
configuring the guest operating system (114) to include prerequisite application (116) associated with the product application (118);
installing the product application (118) onto the guest operating system (114);
capturing an image (120) of the virtual machine (122) of the host device (126);
providing instructions (132) to the customer (134) to access the virtualization software (124); and
providing the image (120) to the customer (134) for execution of the virtual machine (122) therewith.

18. The method of claim 17 wherein the determining an order comprises:
receiving the order (138) for the installation of the product application (118) onto a plurality of computers (136A, 136B) of the customer (134).

19. The method of claim 17 or 18 wherein the configuring the guest operating system (114) comprises:
determining that the product application (118) benefits from a prerequisite application (116) existing on the guest operating system (114); and
providing the prerequisite application (116) to the guest operating system (114).

20. The method of any one of claims 17 to 19 wherein the providing the image (120) comprises:
providing the image (120) for execution on a local version of the virtualization software (124) that is executing on a local device (136A) of the customer (134).

21. The method of any one of claims 17 to 20 wherein the providing the image (120) comprises:
providing the image (120) on a host device (126) as a service accessible by the customer (134).

22. A computer program product comprising computer readable instructions, which when loaded and run in a computer and/or computer network system, causes the computer system and/or the computer network system to perform operations according to a method of anyone of claims 17 to 21.
